# EUROPEAN PATENT APPLICATION

(11) **EP 4 786 800 A2**
(43) Date of publication of application: **05.08.2026**
(21) Application number: 26186080.3
(22) Date of filing: 27.06.2022
(51) Int. Cl.: F16B 5/00

(54) **REFRIGERABLE MULTI-SHELF CABINET**

(30) Priority: 06.07.2021 IT 202100017807
(62) Divisional of application: 22743565.8
(71) Applicant: LENARI ITALIA S.r.l., 61032 Fano, Pesaro e Urbino (IT)
(72) Inventor: GIOVAGNOLI, Loris, I-61032 Fano, PESARO E URBINO (IT); SEMPRINI, Edgardo, I-61032 Fano, PESARO E URBINO (IT)
(74) Representative: De Lorenzo, Danilo

(57) **Abstract**

A pallet assembly (400) comprising a refrigerable multi-shelf cabinet (1) disassembled and resting fully on the pallet (401) and totally contained in a volumetric space (V), defined by virtually projecting the perimeter of the pallet (401) along a vertical direction Z, perpendicular to a support plane (P) of the pallet (401). A refrigerable multi-shelf cabinet (1) for storing and displaying refrigerated or frozen packaged products, includes a technical bench (10), suitable for being placed on a horizontal floor (O) and for containing refrigerating means (11) and a refrigerable display case (20) arranged above the technical bench (10). The refrigerable display case (20) comprises structural walls (21) which define an internal compartment (22) refrigerable by the refrigerating means (11) and extends in a vertical direction (Y) perpendicular to the horizontal floor (O). The structural walls (21) comprise at least one vertical rear wall (210), joined to the technical bench and a right side wall (211) and/or a left side wall (212), to which it is joined. The vertical rear wall (210) extends along the vertical direction (Y) for a length of the rear wall (LP) greater than one thousand two hundred millimeters and is composed of at least a first rear modular panel (210') and a second rear modular panel (210") removably fixed to each other. The first rear modular panel (210') and the second rear modular panel (210") extend along the vertical direction (Y) each for a rear panel length (LP1, LP2) less than or equal to one thousand two hundred millimeters.

## Description

The present invention relates to a refrigerable multi-shelf cabinet, also known in the field as a refrigerated wall display, or as a refrigerated wall unit or even more simply as a wall unit. In particular, the invention relates to a refrigerable multi-shelf cabinet, of the type suitable for containing refrigerated or frozen products displayed in the multi-shelf cabinet positioned inside a supermarket.

Two main types of refrigerable (or wall-mounted) multi-shelf cabinets are known in the art. One type is represented by refrigerated multi-shelf cabinets with transparent hinged doors which, once opened, allow access to the products on display. A second type is represented by open-type refrigerated multi-shelf cabinets, or also called "curtain". In this second type, the products displayed on the shelves are always accessible, without having to open any door, but a curtain is provided to close the refrigerated compartment, for example to be used when the supermarket is closed.

Inconveniently, both types of refrigerated multi-shelf cabinets consist of sheet metal panels and large doors, which must be transported and assembled on the intended place of installation. This involves huge resources for the shipment and transport of such wall units, as well as relatively complex operations for their assembly on the place of installation.

Furthermore, inconveniently, the monolithic sheet metal panels of the prior art do not allow the type of wall unit to be easily diversified, neither from the structural point of view (for example in its final dimensions in length or height), nor from the point of view of the final aesthetic effect, actually preventing a modularity of the product.

It is therefore clear that each of the aforementioned types of refrigerated multi-shelf cabinets suffers from drawbacks linked to the reasons listed above.

One of the objects of the present invention is that of implementing a refrigerable multi-shelf cabinet which is able to obviate the drawbacks of the refrigerated multi-shelf cabinets of the prior art, in such a way as to ensure improved portability. Furthermore, a further object of the present invention is to facilitate assembly operations, as well as to provide the possibility of easily diversifying the final product, guaranteeing the possibility of being able to modify the final dimensions or capacity as desired. The above objects are clearly achieved, while maintaining the known advantages of the refrigerated multi-shelf cabinets of the prior art.

The aforesaid objects are achieved by a refrigerable multi-shelf cabinet according to the appended independent claims. The dependent claims describe embodiment variations.

The features and the advantages of the present invention will appear more clearly from the following description, made by way of an indicative and nonlimiting example with reference to the accompanying figures, in which:

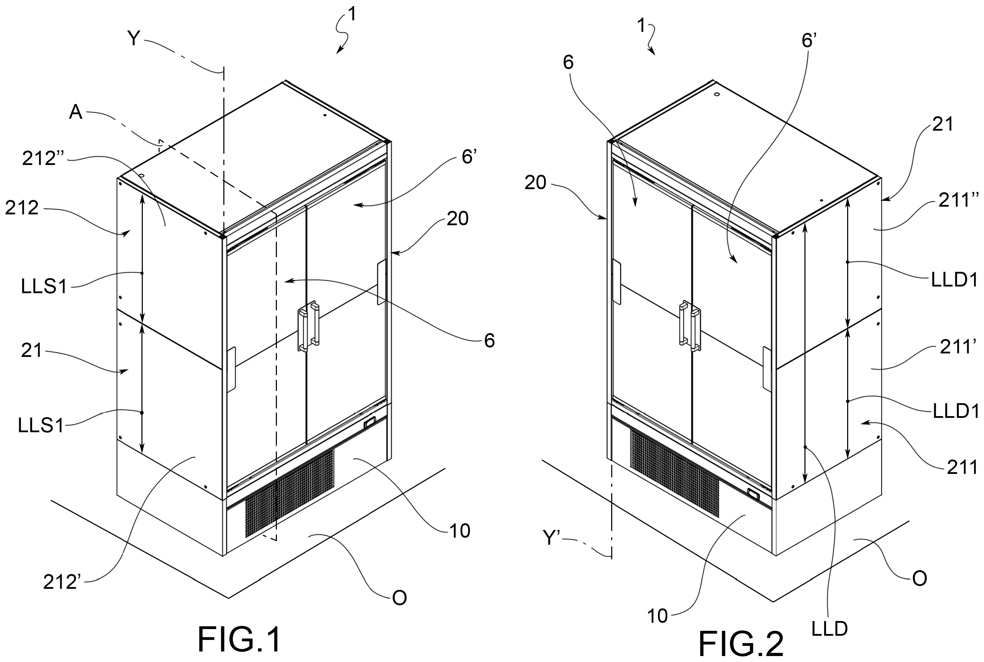

- Figure 1 shows an axonometric view of a refrigerable multi-shelf cabinet according to an embodiment of the present invention;
- Figure 2 shows an axonometric view of the refrigerable multi-shelf cabinet of Figure 1 from another point of view;
- Figure 3 shows an axonometric view of the refrigerable multi-shelf cabinet of Figure 1 seen from the rear;
- Figure 4 shows a sectional view along the section plane A shown in Figure 1, of the refrigerable multi-shelf cabinet of Figure 1:

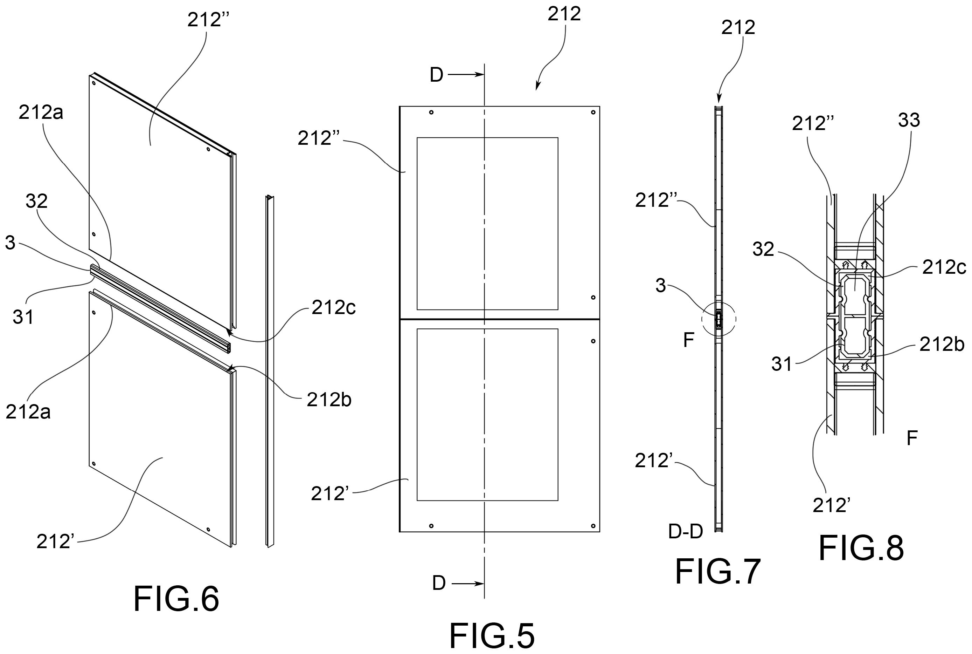

- Figure 5 shows a front plane view of a side wall, in particular of a left side wall, of the refrigerable multi-shelf cabinet, according to an embodiment of the present invention;
- Figure 6 shows an axonometric view of an exploded view of a side wall, in particular of a left side wall, of the refrigerable multi-shelf cabinet, according to an embodiment of the present invention;
- Figure 7 shows a sectional view along the section plane D-D of Figure 5 of the side wall of Figure 5;
- Figure 8 shows a detail F shown in Figure 7 of the side wall of Figure 7;

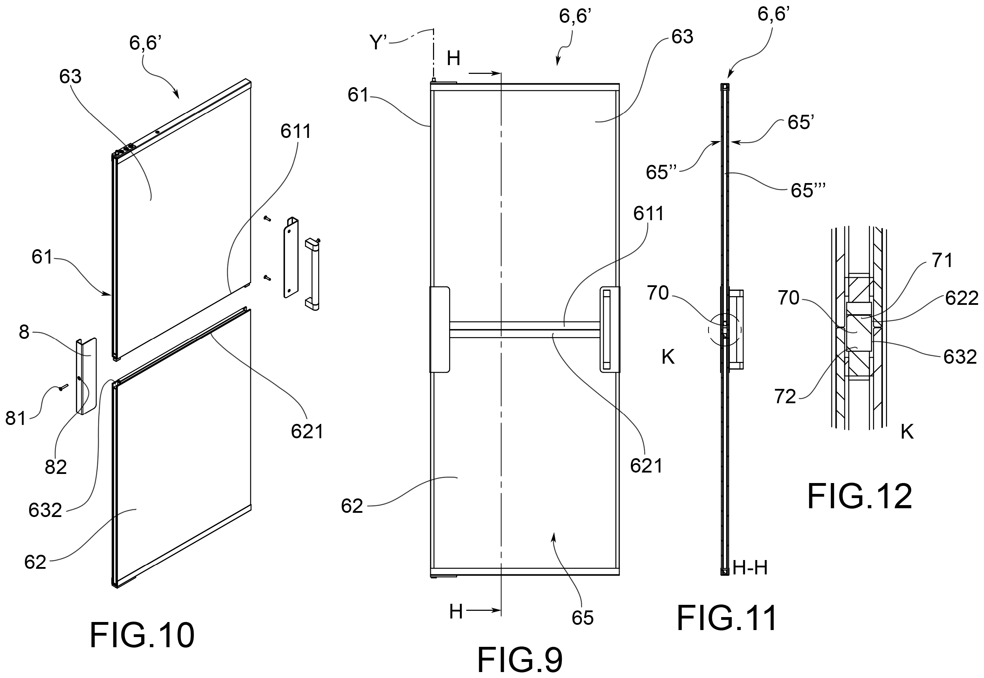

- Figure 9 shows a front plane view of a display leaf of the refrigerable multi-shelf cabinet, according to an embodiment of the present invention;
- Figure 10 shows an axonometric view of an exploded view of a display leaf of the refrigerable multi-shelf cabinet, according to an embodiment of the present invention;
- Figure 11 shows a sectional view along the section plane H-H of Figure 9 of the display leaf of Figure 9;
- Figure 12 shows a detail K shown in Figure 11 of the display leaf of Figure 11;

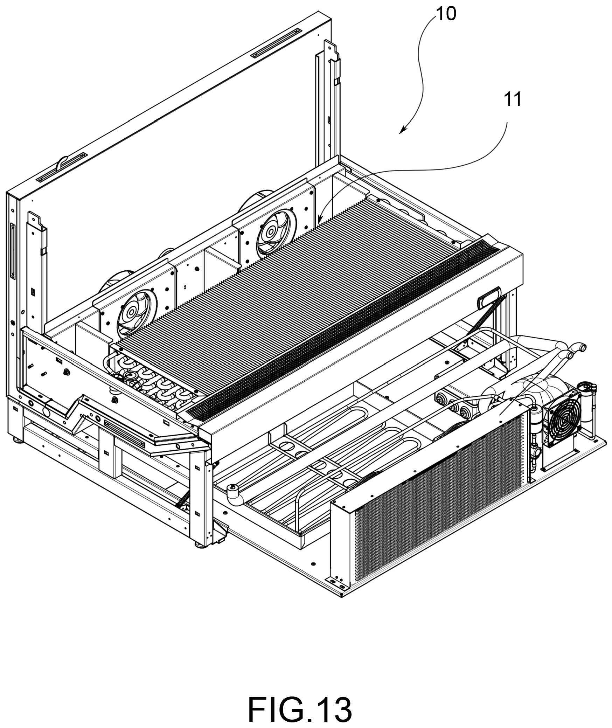

- Figure 13 shows a technical bench of the refrigerated multi-shelf cabinet according to an embodiment of the present invention;
- Figure 14 shows a pallet assembly comprising a refrigerable multi-shelf cabinet 1 disassembled and resting fully on a pallet, according to an embodiment of the present invention.

According to the accompanying figures, reference numeral 1 denotes as a whole a refrigerable multi-shelf cabinet 1, also known in the field as a refrigerated wall display or wall display case, for the storage and display of refrigerated or frozen packaged products (for example packaged dairy products and cured meats, or frozen products and the like), in supermarkets. The refrigerable multi-shelf cabinet 1 comprises a technical bench 10, suitable for being arranged on a horizontal floor O and for containing refrigerating means 11. The refrigerating means comprise any means known to those skilled in the art for refrigerating a refrigerable multi-shelf cabinet, for example a refrigeration system comprising a compressor, a refrigerant fluid and the related refrigerant fluid circulating circuits.

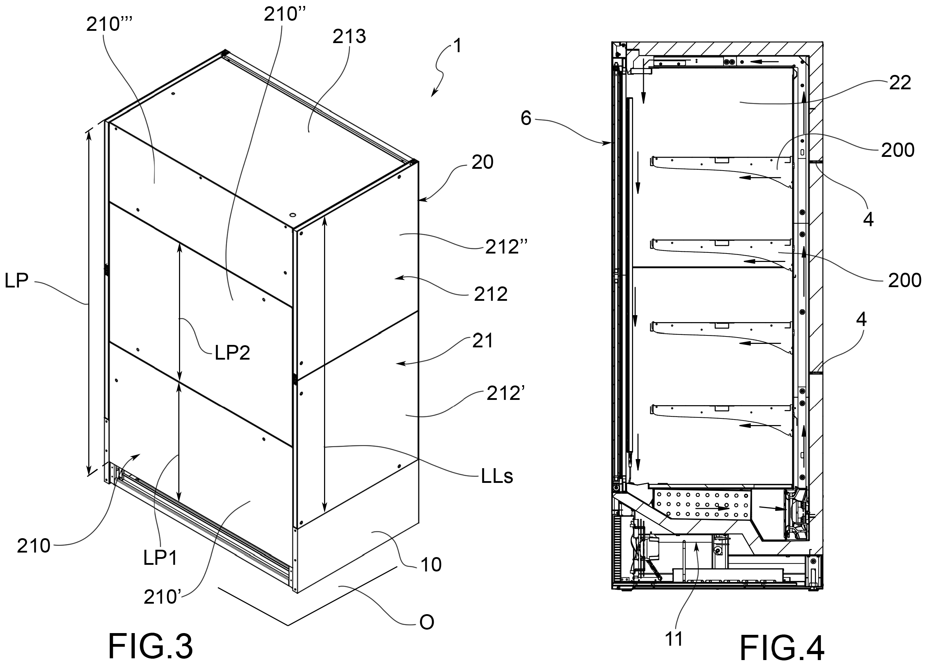

The refrigerable multi-shelf cabinet 1 also comprises a refrigerable display case 20 arranged above the technical bench 10 and comprising structural walls 21 which define an internal compartment 22 being refrigerable by the refrigerating means 11, for example by convective motion of cold air, as exemplarily indicated by the arrows shown in Figure 4.

The refrigerable display case 20 extends in a vertical direction Y perpendicular to the horizontal floor O and houses horizontal shelves 200, preferably supported cantilevered by the structural walls 21, distanced from one another and suitable for supporting the packaged products.

The structural walls 21 comprise at least one vertical rear wall 210, joined to the technical bench and a right side wall 211 and/or a left side wall 212, to which it is joined.

Preferably, the vertical rear wall 210 is made with metal sheet panels, comprising a cavity filled with insulating material, for example an expanded polymer.

The vertical rear wall 210 extends along the vertical direction Y for a rear wall length LP greater than one thousand two hundred millimeters. According to an aspect of the invention, the vertical rear wall 210 is composed of at least one first rear modular panel 210' and a second rear modular panel 210" removably fixed to each other.

The first rear modular panel 210' and the second rear modular panel 210" extend along the vertical direction Y each for a rear panel length LP1, LP2 less than or equal to one thousand two hundred millimeters, or for a length less than or equal to eight hundred millimeters.

Preferably, the horizontal shelves 200 extend for a greater extension dimension thereof less than or equal to one thousand two hundred millimeters.

According to an embodiment, the right side wall 211 or the left side wall 212, or both the right side wall 211 and the left side wall 212, extends along the vertical direction Y for a side wall length LLD, LLS greater than one thousand two hundred millimeters.

According to an embodiment, the right side wall 211 or the left side wall 212, or both the right side wall 211 and the left side wall 212, is each composed of at least one first side modular panel 211', 212' and second side modular panel 211", 212" removably fixed to each other. The first side modular panel 211', 212' and the second side modular panel 211", 212" extend along the vertical direction Y each for a side modular panel length LLS1, LLD1 less than or equal to one thousand two hundred millimeters, or for a side modular panel length LLS1, LLD1 less than or equal to eight hundred millimeters.

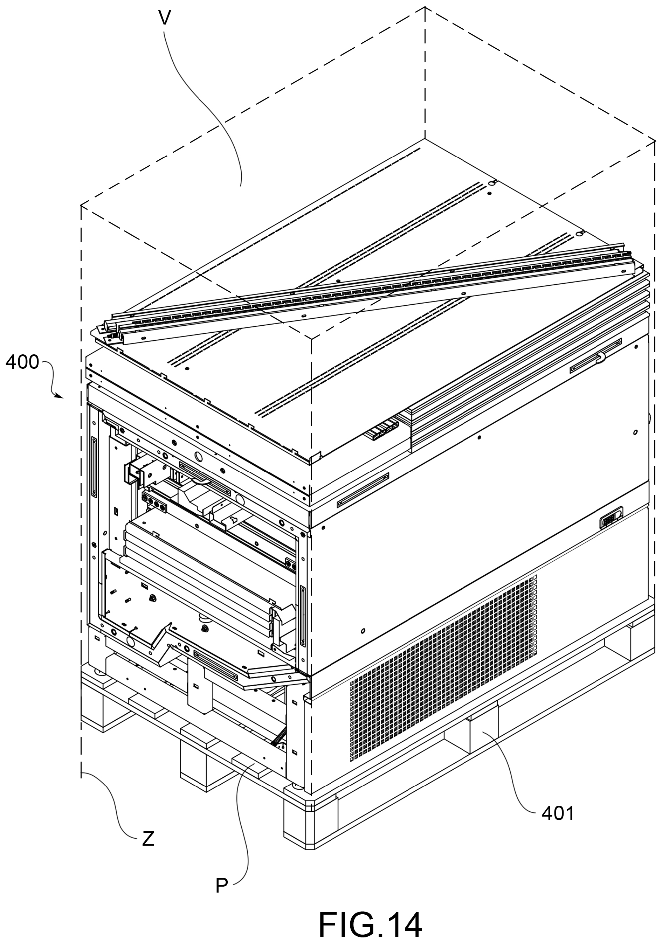

According to an advantageous embodiment, all the structural walls 21 of the refrigerable display case 20 are each composed of at least one modular panel 210', 210", 211', 211", 212', 212" which extends in each of the three spatial dimensions for a length less than or equal to one thousand two hundred millimeters. This advantageously allows the entire refrigerable display case 20, and possibly also the technical bench 10, to be stored in a completely disassembled manner fully on top of a pallet of standard size, as shown for example in Figure 14. In other words, the entire refrigerable multi-shelf cabinet 1 may be stored in a disassembled manner on top of a pallet of standard size, i.e. the volume occupied by all the elements that make up the refrigerable multi-shelf cabinet 1 is contained within the volumetric space V, obtained by hypothetically projecting the perimeter of the pallet along the vertical direction, perpendicular to the support plane P of the pallet.

According to an embodiment, all the structural walls 21 of said refrigerable display case 20 are each composed of at least one modular panel 210', 210", 211', 211", 212', 212" which extends in the greatest extension dimension thereof for a length less than or equal to one thousand two hundred millimeters and for the second greatest extension dimension thereof for a length less than eight hundred millimeters. In other words, the modular panel 210', 210'', 211', 211'', 212', 212" is a parallelepiped having an extension dimension less than or equal to one thousand two hundred millimeters, a second dimension less than or equal to eight hundred millimeters and a third dimension of much lower height which defines the thickness of the modular panel.

According to an embodiment, for example shown in Figure 3, the vertical rear wall 210 is composed of at least a first rear modular panel 210', a second rear modular panel 210" and also a third rear modular panel 210‴, removably fixed to each other. Preferably, moreover, the refrigerable multi-shelf cabinet 1 further comprises an upper wall 213, arranged perpendicular to the vertical rear wall 210 and which closes the internal compartment 22 at the top. In this variant, the upper wall 213 and the third rear modular panel 210" each extend in the greatest extension dimension thereof for a length less than or equal to one thousand two hundred millimeters.

According to an embodiment, the refrigerable multi-shelf cabinet 1 comprises a profiled connection element 3 which joins the first side modular panel 211', 212' and the second side modular panel 211", 212" to each other. The first side modular panel 211', 212' and the second side modular panel 211'', 212'', each comprise a panel edge 212a at the joining region between the first side modular panel 211', 212' and the second side modular panel 211", 212" and at said panel edge 212a, the first side modular panel 211', 212' and the second side modular panel 211", 212" comprise a first coupling seat 212b and a second coupling seat 212c, respectively. The first coupling seat 212b houses and sealingly engages a first portion 31 of the profiled connection element 3 and the second coupling seat 212c houses and sealingly engages a second portion 32 of the profiled connection element 3. In this way, an easy and stable connection between the modular panels is guaranteed and at the same time insulation and tightness are guaranteed.

Preferably, the first coupling seat 212b and the second coupling seat 212c are formed in the thickness of the first side modular panel 211', 212' and of the second side modular panel 211", 212'', respectively. In other words, the first coupling seat 212b and the second coupling seat 212c are formed in the smaller wall of the first side modular panel 211', 212' and of the second side modular panel 211", 212", so that the side modular panels are joined together end-to-end along the panel thickness.

Preferably, the profiled connection element 3 is inserted by sliding or snapping into the first coupling seat 212b and into the second coupling seat 212c.

According to an embodiment, the first side modular panel 211', 212' and the second side modular panel 211", 212" are double-glazed panels.

Preferably, the profiled connection element 3 is made of transparent or translucent plastic material, preferably of a methacrylate polymer. In this way, a transparency or translucency is obtained also at the joining region between the first side modular panel 211', 212' and the second side modular panel 211", 212'', as well as ensuring adequate insulation and sealing.

According to an embodiment, the profiled connection element 3 is a hollow section element, i.e. comprising an internal cavity 33 suitable for guaranteeing a thermal insulating function.

Preferably, the refrigerable multi-shelf cabinet 1 further comprises a gasket element 4, for example a plastic or silicone or rubber profile, interposed between the first rear modular panel 210' and the second rear modular panel 210" so as to guarantee the thermal seal in the joining region between the first rear modular panel 210' and the second rear modular panel 210".

According to an embodiment, the refrigerable display cabinet 20 comprises at least one display leaf 6, 6', made at least partially from transparent material and suitable to be placed on a display side for a consumer customer. This embodiment, therefore, is aimed at implementing a wall display case, i.e. a refrigerable multi-shelf cabinet 1, provided with one or more leaves, for example a pair of leaves 6, 6' as shown in the accompanying figures, which sealingly close the internal compartment 22, in contrast to the type of refrigerable multi-shelf cabinet 1 without the leaves, but for example possibly provided with a front closing curtain.

According to an aspect of the invention, the display leaf 6, 6', also an object per se of the present invention, at a perimeter edge 61 thereof, is constrained or is suitable for being constrained to one 211, 212 of the structural walls 21 rotatably about an axis of rotation Y', so as to be able to be rotated to enable access to the internal compartment 22 from the display side, by an operator.

Preferably, the display leaf 6, 6' is composed of at least one first leaf modular panel 62 and a second leaf modular panel 63, at least partially made of transparent or translucent material, joined to each other along a respective joining edge 611, 621.

The first leaf modular panel 62 and the second leaf modular panel 63 form, when joined together, the entire display leaf 6, 6', therefore composed of an internal leaf face 65'' facing the internal compartment 22, an external leaf face 65' facing the side opposite the internal compartment 22 and a leaf wall 65‴, which joins the external leaf face 65' and the internal leaf face 65'' and which defines the thickness of the display leaf 6, 6'. The joining edge 611, 621, is therefore an edge lying on the leaf wall 65‴.

Furthermore, the display leaf 6, 6' comprises a joining and sealing element 70 interposed between the first leaf modular panel 62 and the second leaf modular panel 63, at said joining edge 611, 621. At said joining edge 611, 621, the first leaf modular panel 62 and the second leaf modular panel 63 comprise a first leaf coupling seat 622 and a second leaf coupling seat 632, respectively, preferably obtained in the leaf wall panel 65". The first leaf coupling seat 622 houses and sealingly engages a first joining and sealing element portion 71 of the joining and sealing element 70 and the second leaf coupling seat 632 houses and sealingly engages a second portion 72 of the joining and sealing element 70. In this way, a leaf with a length greater than one thousand two hundred millimeters is obtained, capable of maintaining the thermal sealing features of the entire leaf.

According to an advantageous embodiment, the first leaf modular panel 62 and the second leaf modular panel 63 are double-glazed panels.

Preferably, the joining and sealing element 70 is made of transparent or translucent plastic material, preferably of a methacrylate polymer. In this way, a leaf with a length greater than one thousand two hundred millimeters is obtained, capable of maintaining the thermal sealing and transparency/translucency features of the entire leaf.

According to an embodiment, the refrigerable multi-shelf cabinet 1 comprises a joining plate 8, at least partially shaped like a "C" or "U" or "L", joined to the first leaf modular panel 62 and to the second leaf modular panel 63 in proximity to the joining edge 611, 621 and to the perimeter edge 61. The joining plate 8 mechanically supports the stresses imposed on the leaf in the direction perpendicular to a transparent or translucent display surface 65 of the leaf 6, 6', for example in the direction perpendicular to the external leaf face 65'.

According to an embodiment of the refrigerable multi-shelf cabinet 1, the joining plate 8 comprises a hole 82. In this variant, a fastening pin 81 passing into the hole 82 is fastened into the joining and sealing element 70, without crossing the internal chamber of the double glazed panels. In other words, the fastening pin 81 is directly inserted (fixed or screwed) only in the joining and sealing element 70. This allows any thermal bridges between the internal compartment, the double glazing and the outside to be minimized or even avoided.

The present invention further relates to a pallet assembly 400, comprising a refrigerable multi-shelf cabinet 1 described in the present discussion but disassembled, resting fully on a pallet 401 and totally contained in a volumetric space V, defined by virtually projecting the perimeter of the pallet along a vertical direction Z, perpendicular to the support plane P of the pallet.

In particular, the pallet assembly according to an embodiment of the invention provides that the refrigerable multi-shelf cabinet 1 described in the present description disassembled, resting fully on a pallet, has an assembly height along the vertical direction Z lower than or equal to twelve hundred millimeters. Such assembly height is preferably calculated as the distance between the support surface P of the pallet and the furthest point of the refrigerable multi-shelf cabinet 1 disassembled with respect to this support surface P. This advantageously allows a pallet assembly to be stacked on top of another pallet assembly within the same container, maximizing space and transport efficiency.

Innovatively, the refrigerable multi-shelf cabinet 1 according to the present invention allows the limitations described in the prior art to be brilliantly overcome.

In particular, the refrigerable multi-shelf cabinet 1 according to the present invention, by virtue of the provision of at least one of the structural walls with modular panels joined together, allows the volume occupied during the transport step to be compacted, thus guaranteeing transport efficiency (a greater number of cabinets in the same space) and at the same time ensuring greater ease of on site assembly of the cabinet. In fact, since the panels are small in size, handling and assembly by the installer are easier.

Furthermore, the small dimensions of the modular panels below one thousand two hundred millimeters, allows the use of standard transport pallets (for example a pallet in which one of the largest dimensions is one thousand two hundred millimeters, such as a so-called Euro-pallet), with consequent advantages in terms of efficiency and ease of transport. In fact, it is now also possible to put side by side and stack more than one pallet and, therefore, more than one cabinet, during container transport.

Furthermore, by virtue of the presence of modular panels according to the invention, it is possible to disassemble and reassemble the cabinet in a simple and efficient manner, even several times, without the need for special equipment.

Also by virtue of the presence of modular panels it is possible to place more than one cabinet side by side and join them together to form a set of cabinets extending for a length even greater than one thousand two hundred millimeters.

Advantageously, the presence of a profiled connection element between the modular panels, and likewise the provision of the joining and sealing element between the modular leaf panels allows adequate insulation, i.e. adequate energy efficiency of the entire cabinet to be maintained, while introducing a modularity of the product and a possibility of diversification of the final product.

It is clear that those skilled in the art, in order to satisfy contingent and specific needs, may make modifications to the invention described above, said modifications being all contained within the scope of protection as defined in the following claims.

## Claims

1. A pallet assembly (400) comprising a pallet (401), and a refrigerable multi-shelf cabinet (1) for storing and displaying refrigerable or frozen packaged products, said refrigerable multi-shelf cabinet (1) being disassembled into elements and resting fully on the pallet (401), wherein all said elements making up said refrigerable multi-shelf cabinet (1) comprise:
- a technical bench (10), suitable for being arranged on a horizontal floor (O) and for containing refrigerating means (11);
- a refrigerable display case (20) suitable for being arranged above the technical bench (10) and comprising structural walls (21) which define an internal compartment (22) being refrigerable by the refrigerating means (11);
said refrigerable display case (20) being suitable for extending in a vertical direction (Y) perpendicular to the horizontal floor (O) and being suitable for housing horizontal shelves (200) distanced from one another and suitable for supporting the packaged products,
said structural walls (21) comprising at least one vertical rear wall (210), suitable for being joined to the technical bench and a right side wall (211) and/or a left side wall (212), to which it is suitable for being joined,
said refrigerable multi-shelf cabinet (1) being **characterized in that** said vertical rear wall (210) extends along the vertical direction (Y) for a rear wall length (LP) greater than one thousand two hundred millimeters,
and **in that** said vertical rear wall (210) is suitable for being composed of at least one first rear modular panel (210') and a second rear modular panel (210") removably fixed to each other, said first rear modular panel (210') and said second rear modular panel (210") extending along the vertical direction (Y) each for a rear panel length (LP1, LP2) less than or equal to one thousand two hundred millimeters;
and **in that** the volume of all the elements of said refrigerable multi-shelf cabinet (1) is totally contained in a volumetric space (V), defined by virtually projecting the perimeter of the pallet (401) along a vertical direction Z, perpendicular to a support plane (P) of the pallet (401).

2. A pallet assembly (400) according to claim 1, wherein said refrigerable multi-shelf cabinet (1), disassembled and resting fully on the pallet, has an assembly height along the vertical direction Z lower than or equal to twelve hundred millimeters, said assembly height being calculated as the distance between a support surface (P) of the pallet and a furthest point of the refrigerable multi-shelf cabinet (1) disassembled with respect to said support surface (P).

3. A refrigerable multi-shelf cabinet (1) for storing and displaying refrigerable or frozen packaged products, said refrigerable multi-shelf cabinet (1) when disassembled being suitable for making up pallet assembly according to anyone of the claims from 1 to 2,
wherein said refrigerable multi-shelf cabinet (1) when assembled comprising:
- a technical bench (10), suitable for being arranged on a horizontal floor (O) and for containing refrigerating means (11);
- a refrigerable display case (20) arranged above the technical bench (10) and comprising structural walls (21) which define an internal compartment (22) being refrigerable by the refrigerating means (11);
said refrigerable display case (20) extending in a vertical direction (Y) perpendicular to the horizontal floor (O) and housing horizontal shelves (200) distanced from one another and suitable for supporting the packaged products,
said structural walls (21) comprising at least one vertical rear wall (210), joined to the technical bench and a right side wall (211) and/or a left side wall (212), to which it is joined,
said refrigerable multi-shelf cabinet (1) being **characterized in that** said vertical rear wall (210) extends along the vertical direction (Y) for a rear wall length (LP) greater than one thousand two hundred millimeters,
and **in that** said vertical rear wall (210) is composed of at least one first rear modular panel (210') and a second rear modular panel (210") removably fixed to each other, said first rear modular panel (210') and said second rear modular panel (210") extending along the vertical direction (Y) each for a rear panel length (LP1, LP2) less than or equal to one thousand two hundred millimeters.

4. Refrigerable multi-shelf cabinet (1) according to claim 3, wherein the horizontal shelves (200) extend for a greatest extension dimension thereof less than or equal to one thousand two hundred millimeters,
and wherein said right side wall (211) and/or said left side wall (212) extends along the vertical direction (Y) for a side wall length (LLD, LLS) greater than one thousand two hundred millimeters,
and in that said right side wall (211) and/or said left side wall (212) is each composed of at least one first side modular panel (211', 212') and a second side modular panel (211", 212") removably fixed to each other, said first side modular panel (211' 212') and said second side modular panel (211", 212") extending along the vertical direction (Y) each for a side modular panel length (LLS1, LLD1) less than or equal to one thousand two hundred millimeters.

5. Refrigerable multi-shelf cabinet (1) according to claim 3 or 4, wherein all the structural walls (21) of said refrigerable display case (20) are each composed of at least one modular panel (210', 210", 211', 211", 212', 212") which extends in each of the three spatial dimensions for a length less than or equal to one thousand two hundred millimeters.

6. Refrigerable multi-shelf cabinet (1) according to claim 3 or 4 or 5, wherein all the structural walls (21) of said refrigerable display case (20) are each composed of at least one modular panel (210', 210", 211', 211", 212', 212'') which extends in the greatest extension dimension thereof for a length less than or equal to one thousand two hundred millimeters and for the second greatest extension dimension thereof for a length less than eight hundred millimeters.

7. Refrigerable multi-shelf cabinet (1) according to any one of claims from 4 to 6, comprising a profiled connection element (3) suitable for joining the first side modular panel (211', 212') and the second side modular panel (211", 212") to each other,
and wherein the first side modular panel (211', 212') and the second side modular panel (211", 212"), each comprise a panel edge (212a) at the joining region between the first side modular panel (211', 212') and the second side modular panel (211", 212"),
and wherein, at said panel edge (212a) the first side modular panel (211', 212') and the second side modular panel (211", 212") comprise a first coupling seat (212b) and a second coupling seat (212c), respectively,
wherein said first coupling seat (212b) houses and sealingly engages a first portion (31) of the profiled connection element (3) and said second coupling seat (212c) houses and sealingly engages a second portion (32) of the profiled connection element (3).

8. Refrigerable multi-shelf cabinet (1) according to claim 7, wherein the profiled connection element (3) is inserted by sliding or snapping into the first coupling seat (212b) and into the second coupling seat (212c).

9. Refrigerable multi-shelf cabinet (1) according to claim 7 or 8, wherein the first side modular panel (211', 212') and the second side modular panel (211", 212") are double glazed panels and wherein the profiled connection element (3) is made of transparent or translucent plastic material, preferably a methacrylate polymer.

10. Refrigerable multi-shelf cabinet (1) according to claim 7 or 8 or 9, wherein the profiled connection element (3) is a hollow section element, i.e. comprising an internal cavity (33) suitable for guaranteeing a thermal insulating function.

11. Refrigerable multi-shelf cabinet (1) according to any one of the claims from 3 to 10, comprising a gasket element (4), interposed between the first rear modular panel (210') and the second rear modular panel (210'') so as to guarantee the thermal seal in the joining region between the first rear modular panel (210') and the second rear modular panel (210").

12. Refrigerable multi-shelf cabinet (1) according to any one of the claims from 3 to 11, wherein the refrigerable display case (20) comprises at least one display leaf (6, 6'), at least partially made of transparent material and suitable for being arranged towards a display side for a consumer customer, said display leaf (6, 6'), at a perimeter side (61) thereof, being constrained to one (211, 212) of the structural walls (21) rotatably about an axis of rotation (Y'), so as to be able to be rotated to enable access to the internal compartment (22) from the display side, by an operator,
said display leaf (6, 6') being composed of at least one first leaf modular panel (62) and a second leaf modular panel (63), at least partially made of transparent or translucent material, joined to each other along a respective joining edge (611, 621),
and of a joining and sealing element (70) interposed between the first leaf modular panel (62) and the second leaf modular panel (63), at said joining edge (611, 621), and wherein, at said joining edge (611, 621), the first leaf modular panel (62) and the second leaf modular panel (63) comprise a first leaf coupling seat (622) and a second leaf coupling seat (632), respectively,
wherein said first leaf coupling seat (622) houses and sealingly engages a first joining and sealing element portion (71) of the joining and sealing element (70) and said second leaf coupling seat (632) houses and sealingly engages a second portion (72) of the joining and sealing element (70).

13. Refrigerable multi-shelf cabinet (1) according to claim 12, wherein the first leaf modular panel (62) and the second leaf modular panel (63) are double glazed panels and wherein the joining and sealing element (70) is made of transparent or translucent plastic material, preferably a methacrylate polymer.

14. Refrigerable multi-shelf cabinet (1) according to claim 12 or 13, comprising a joining plate (8) at least partially shaped like a "C" or "U" or "L", joined to the first leaf modular panel (62) and to the second leaf modular panel (63) in proximity to the joining edge (611, 621) and to the perimeter edge (61), said joining plate (8) being suitable for mechanically supporting the strain imposed on the leaf in the perpendicular direction to the transparent or translucent display surface (65) of the leaf (6, 6').

15. Refrigerable multi-shelf cabinet (1) according to claim 14 when dependent on claim 11, wherein the joining plate (8) comprises a hole (82),
and wherein the refrigerable multi-shelf cabinet (1) comprises a fastening pin (81) passing into the hole (82) and fastened into the joining and sealing element (70), without crossing the internal chamber of the double glazed panels.
